(19) Europäisches Patentamt / European Patent Office / Office européen des brevets

(11) **EP 2 453 591 B1**

(12) **EUROPEAN PATENT SPECIFICATION**

(45) Date of publication and mention
of the grant of the patent:
**23.05.2018 Bulletin 2018/21**

(51) Int Cl.:
***H04B 7/185*** (2006.01)

(21) Application number: **11188911.9**

(22) Date of filing: **11.11.2011**

(54) **Short-Periodicity Carrier Acquisition for Satcom Interference Cancellation**

Trägererfassung von kurzer Dauer zum Satcom-Interferenzabbruch

Acquisition de porteuse à courte périodicité pour élimination des interférences de communication satellite

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.11.2010 US 946492**

(43) Date of publication of application:
**16.05.2012 Bulletin 2012/20**

(73) Proprietor: **Global Eagle Entertainment Inc.**
**Los Angeles, CA 90292 (US)**

(72) Inventors:
• **Jayasimha, Sriram**
**500082 Hyderabad (IN)**
• **Paladugula, Jyothendar**
**500049 Hyderabad (IN)**

(74) Representative: **Samson & Partner Patentanwälte mbB**
**Widenmayerstraße 6**
**80538 München (DE)**

(56) References cited:
**US-A1- 2002 197 958    US-A1- 2006 171 418**
**US-B1- 7 522 877**

• **STEIN S: "ALGORITHMS FOR AMBIGUITY FUNCTION PROCESSING", IEEE TRANSACTIONS ON ACOUSTICS, SPEECH AND SIGNAL PROCESSING, IEEE INC. NEW YORK, USA, vol. ASSP-29, no. 3, PART 02, 1 June 1981 (1981-06-01), pages 588-599, XP001007485, ISSN: 0096-3518, DOI: 10.1109/TASSP.1981.1163621**
• **S Jayasimha ET AL: "Interference Cancellation in Satcom and Ranging", , 31 December 2008 (2008-12-31), pages 1-5, XP055386389, Retrieved from the Internet: URL:http://www.ncc.org.in/download.php?f=N CC2008/2008_B2_1.pdf [retrieved on 2017-06-29]**

## Description

## Field of the Invention

The present invention is directed to duplex frequency reuse satellite communications and more particularly to such communications in which ambiguity in a delay is resolved so that interference can be canceled.

## Description of Related Art

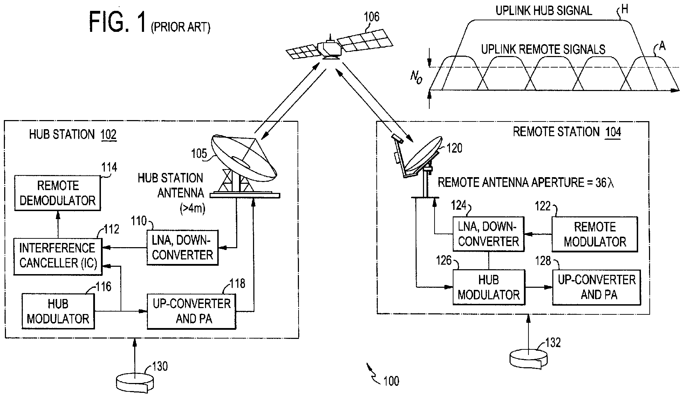

Figure 1 shows a conventional duplex communication system using a satellite transponder with independent forward and return links. In the system 100, a hub station 102 communicates with remote stations 104 via satellites 106. The hub station 102 includes a hub station antenna 108 (typically having an aperture of more than 4m), an LNA (low-noise amplifier) and down-converter 110, an interference canceller (IC) 112, a remote demodulator 114, a hub modulator 116, and an up-converter and PA (power amplifier) 118. The remote station 104 includes a remote antenna 120 (typically having an aperture of 36 times the wavelength), a remote modulator 122, an up-converter and PA 124, an LNA and down-converter 126, and a hub demodulator 128. Software to operate the stations 102, 104 can be supplied in any suitable manner, e.g., on tangible persistent storage media 130, 132 and accessed and implemented by a processor. It can also be supplied as an article of manufacture, e.g., the persistent storage media 130, 132.

Typically, the hub 102 transmits information to the remotes 104 using a wideband carrier via time division multiple access (TDMA). The return link (from the remote very small aperture terminals 104 - VSATs - to the hub 102) is typically single channel per carrier (SCPC, otherwise termed frequency division multiplexing). The SCPC and TDMA bands may not overlap (conventional system) or overlap (interference cancellation system). The interference canceller (IC) 112 removes the replica of the returned hub signal and passes the remote signals to remote demodulators.

In a duplex frequency re-use satellite system such as that of Figure 1, the complex ambiguity function between the transmitted and received signals is used to acquire a differential delay and a differential frequency offset between the transmitted signal and the received echo. The ambiguity function is

$$\chi(\tau, f) = \int_{\wedge}^{T} A(t) \cdot H^*(t + \tau) \cdot e^{-j2\pi ft} \, dt \,,$$ where $H(t)$ and $A(t)$ are the complex reference and replica envelopes (that may have correlated components). Here, $\chi(\tau, f)$ depends on $\tau$ and $f$, which are the differential delay and the frequency offset respectively. In case the correlated component of $H(t)$ and $A(t)$ is a white random process, then $\chi(\tau, f) = A\delta(\tau_0, f_0)$. However, in the case considered here, $\chi(\tau, f)$ may have multiple peaks.

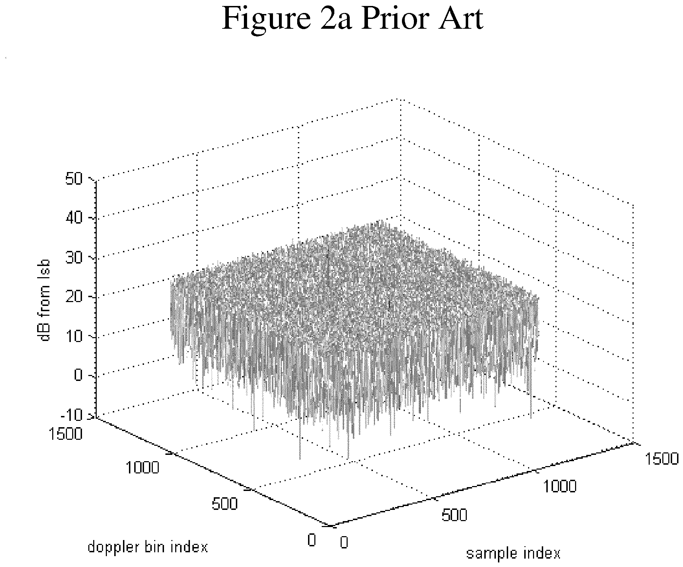

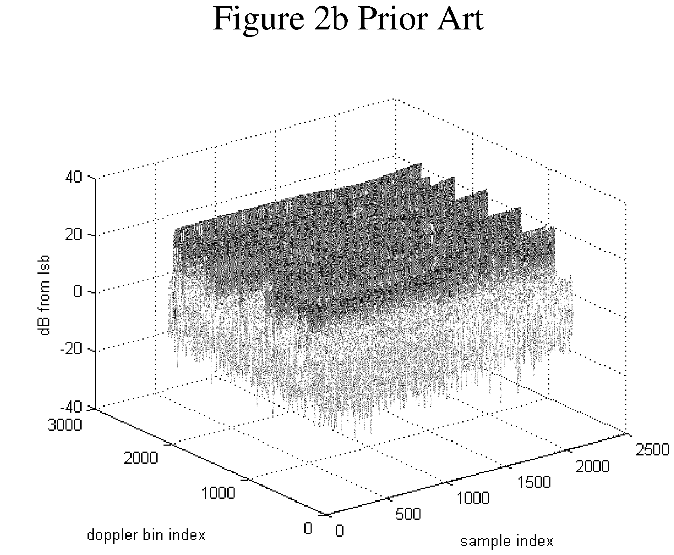

The above assumes an ideal case in which the modulator output is aperiodic (at least for the duration of the satellite round trip delay, typically 230-290ms), leading to one unique correlation peak (Figure 2a). However, when the modulator output has a shorter periodicity (particularly for high rate data, with no or constant data), several correlation peaks in both time and frequency domains result (Figure 2b). This leads to an ambiguity in selecting a peak for IC tracking. More generally, ambiguity can arise when the transmitted signal repeats with a periodicity less than the round-trip delay.

The US application US 2002/197958 discloses a carrier-in-carrier system applying interference cancellation of received replica. The publication by Seymour Stein: "Algorithms for Ambiguity Function Processing", IEEE Transactions On Acoustics, Speech and Signal Processing, Vol. ASSP-29, No 3, June 1981 shows a method how to determine delay and frequency offset of such replica.

## Summary of the Invention

It will be seen from the above that a need exists in the art to resolve the above-noted ambiguity so that adequate interference suppression is obtained even with short periodicities.

It is therefore an object of the invention, in at least some embodiments, to provide a delay/Doppler acquisition process that provides for resolution of the ambiguity.

It is another object of the invention, in at least some embodiments, to provide a delay/ Doppler acquisition process that may acquire an incorrect delay, yet still produce adequate IC.

It is still another object of the invention, in at least some embodiments, to provide such a process that ensures that loss of synchronization is detected when the periodicity changes, allowing IC to reacquire.

To achieve the above and other objects, the present invention is directed to interference cancellation in a satellite communication system, involving an autocorrelation on the hub signal to detect a periodicity in the hub signal, determining a search range for a delay in the hub echo signal in accordance with the periodicity, locating the delay in the hub echo signal, and performing the interference cancellation in accordance with the delay.

Ambiguity resolution sufficient for adequate interference suppression assumes greater significance in the context of duplex frequency reuse systems allowing lightly-loaded DVB-S2 transmitted frames (e.g., 3300-symbol DVB-S2 transmitted frames) (with synchronous scramblers). Such systems are commonly encountered in practice. The present invention encompasses a state-transition diagram and method that address this need without in any way changing the operating characteristics when conventional scrambled waveforms are used.

A delay is acquired (either true or false) that provides cancellation (provided that the period does not change). When the period changes, cancellation is discovered to be poor (due to having acquired the signal to a "false" delay). Another delay is acquired (that may be true or false) that provides good cancellation, and so on.

When we have significant periodic components (in the uplink signal), it is not known whether the signal is acquired to the correct delay (because of ambiguity to $n \times$ period). However, the cancellation is substantially improved even if the signal is acquired to an incorrect delay.

## Brief Description of the Drawings

A preferred embodiment of the present invention will be set forth in detail with reference to the drawings, in which:

Figure 1 is a schematic diagram showing an SCPC/TDMA system with IC;
Figure 2a is a plot of the ambiguity function of an aperiodic sequence;
Figure 2b is a plot of the ambiguity function of a periodic sequence;
Figure 3 is a flow chart of an ambiguity function process;
Figure 4 is a flow chart of the pre-acquisition steps for acquiring an ambiguous delay according to the preferred embodiment;
Figure 5 is a state diagram of a state machine that allows periodic interference cancellation; and
Figure 6 is a plot of the delay variation for an orbital inclination of 0.5°.

## Detailed Description of the Preferred Embodiment

A preferred embodiment of the present invention will be set forth in detail with reference to the drawings. The preferred embodiment, or any other embodiment, can be implemented using the hardware of Figure 1 or any other suitable hardware.

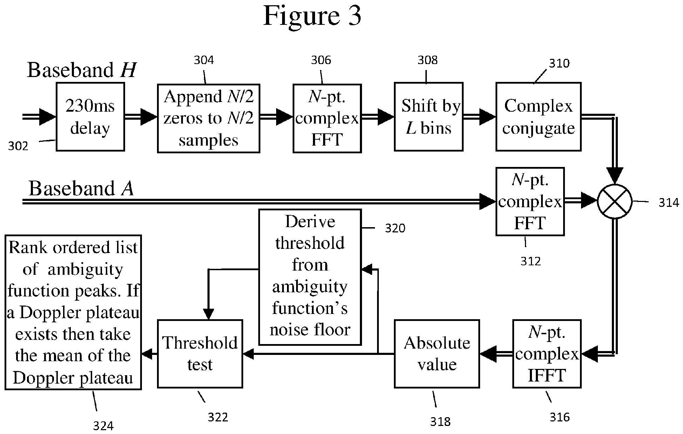

Figure 3 shows ambiguity function blocks with fast Fourier transform (FFT) based computation of cross-correlations between the hub signal (H) and the hub echo signal (A) to estimate the differential delay and the Doppler simultaneously for an aperiodic modulator data sequence. This figure shows steps for determining the satellite channel differential delay and Doppler using the transmitted (H) and received (A) signals. The steps shown in Figure 3 are to implement a suitable ambiguity function, preferably such as disclosed in S. Stein, "Algorithms for Ambiguity Function Processing," IEEE Transaction on Acoustics, Speech and Signal Processing, Vol ASSP-29, No. 3, June 1981. However, the present invention offers improvements over the *Stein* technique in terms of ambiguity resolution, as described herein.

For a high bandwidth IC, cross-correlations over a 60ms span (230ms - 290ms, this range being adequate for geosynchronous satellites with small orbital inclination, as it is the nominal satellite channel propagation delay obtained as a function of the latitude and longitude of the earth) to obtain both fine delay and fine Doppler simultaneously would require an unreasonably large FFT (fast Fourier transform) size. To overcome this in practice, the correlations are first done at a lower sampling rate to obtain a fine Doppler and coarse delay. The estimated delay is further refined by repeating the process for two more sampling rates, the next one at an intermediate sampling rate and the final one at a sampling rate higher than the signal bandwidth.

More specifically, in step 302, a delay of 230ms is applied to the baseband $H$. The value of 230ms is selected in this particular embodiment because it is the minimum delay in the range of delays noted above; the acquisition process in the IC can then search over the 60ms range for the remaining delay. In step 304, $N/2$ zeros are appended to $N/2$ samples to provide $N$ points. In step 306, an $N$-point complex fast Fourier transform (FFT) is performed. In step 308, that transform is shifted by $L$ bins, and in step 310, the complex conjugate is taken. Meanwhile, in step 312, an $N$-point FFT of the baseband $A$ is performed. The two are correlated in step 314. In step 316, the $N$-point inverse fast Fourier transform (IFFT) is taken, and in step 318, its absolute value is taken. In step 320, the threshold is derived from the ambiguity function's noise floor. In step 322, a threshold test is applied. This is done because the correlated component is a white process; the threshold test of step 322 determines whether the correlated component has a peak and can thus be considered valid. In step 324, a rank-ordered list of ambiguity function peaks is produced, and if a Doppler plateau exists, then the mean of the Doppler plateau is taken. To account for varying Doppler due to satellite movement, Doppler peaks within 3.5dB of the maximum peak at the acquired delay are obtained. If such peaks are found and they form a neighborhood, then it is treated as a plateau, and the average of the plateau is decided as the estimated Doppler. The values of $L$ and $N$ are design choices dependent on the system and within the ability of those skilled in the art who have reviewed the present disclosure.

When the $H$ signal's periodicity is much less than the satellite round trip delay (for example, when a DVB-S2 modulator's synchronous scrambler is driven by no data or periodic data), there will be several delay correlation peaks at the $H$ signal's periodicity ($\tau_p$) and Doppler correlation peaks at the inverse of the $H$ signal's periodicity ($1/\tau_p$). For the above-noted range of delays of 230-290ms, a periodicity less than 60ms is considered to be much less. Under this condition, the acquisition ranking check is unlikely to find a correct peak with best rank. Since the $H$ signal is periodic, acquisition can lock onto any one of the delay correlation peaks. However, only one of the many delay and Doppler peaks is the true delay and Doppler peak.

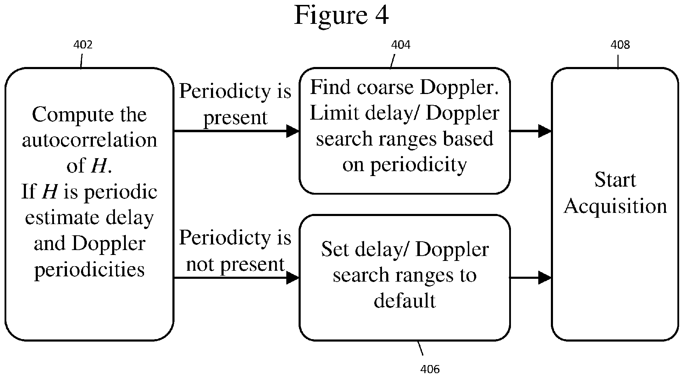

Delay ambiguity is resolved in the following manner, which will be explained with reference to Figure 4. Step 402 is a pre-acquisition step of computing $H$'s autocorrelation to determine the rate at which the periodic correlation peaks are present, which is the reciprocal of the periodicity. If periodicity is found (i.e., the autocorrelation of $H$ results in more than one peak), then in step 404, the range for a further delay search is limited to this periodicity during acquisition. The Doppler ambiguity is resolved by acquiring a coarse frequency offset at a higher decimation stage and then limiting the search range to the inverse of the delay periodicity during fine Doppler acquisition. If no periodicity is found, then in step 406, the delay and Doppler search ranges are set to their default values The default differential delay and Doppler search range in the present embodiment are 60ms and $\pm$8kHz respectively, as they are in Figure 3. Either way, acquisition starts in step 408, in which a process such as that of Figure 3 is carried out.

As an example, a DVB modulator configured for 47Mbaud, QPSK, FEC rate-½, RS-188/204, external data (but no data, input is all zeros), would cause the ambiguity function to have cross-correlation peaks with a delay ambiguity of 277.79$\mu$s and a Doppler ambiguity of 3599.87Hz. These ambiguity parameters, obtained by examining the autocorrelation of $H$, are then used to limit the delay/ Doppler search ranges (see Figure 4). The delay search range is 278$\mu$s, and the Doppler search range is 3600Hz. Since the peak acquired is ambiguous, a change in loading (or periodicity) might cause poor cancellation. In the present example, the values 278$\mu$s and 3600Hz are chosen because they are integer numbers; FFT/IFFT bin resolution will choose (round up to) the next higher integer number based on the sampling rate.

As described above, IC may acquire an ambiguous delay when the $H$ signal is periodic. IC continues to cancel the interference as long as the $H$ modulator's periodicity *and* data loading are unchanged. However, as random data loading increases, the periodic component in the $H$ signal decreases, and the aperiodic component increases. If the IC acquired an ambiguous delay (that is not the true delay), cancellation degrades as the aperiodic component increases. When cancellation is unacceptably high, the IC's loss-of-synchronization detector should trigger, allowing it to re-acquire to a better new ambiguous/ unique delay. When the change in the $H$ signal's aperiodic-to-periodic ratio is large, the IC automatically detects loss of cancellation, allowing re-acquisition to a better delay. However, when this ratio changes gradually, the mean square error (MSE) between the autocorrelation function of $H$ during tracking and the autocorrelation function of $H$ obtained at the time of acquisition is monitored to detect a loss of synchronization. The autocorrelation function of $H$ is normalized to the peak of the function to account for variations in the $H$ signal level during tracking to that of acquisition, thereby obtaining a normalized MSE (below, MSE is to be taken to mean this normalized MSE).

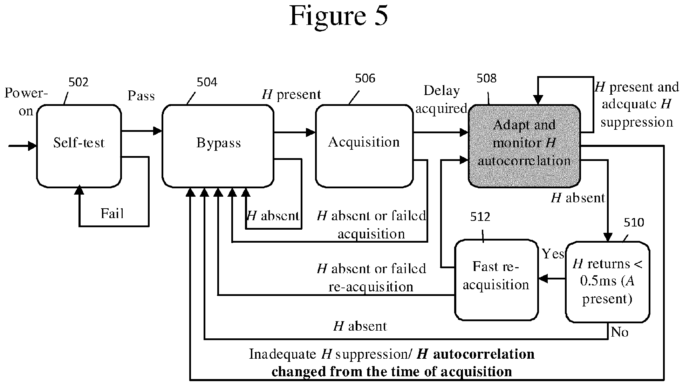

Figure 5 shows a state machine allowing periodic interference cancellation. Upon power-up, the state machine enters a self-test state 502. Once the state machine passes self-test, it goes into a bypass state 504 until $H$ is determined to be present, whereupon it enters an acquisition state 506. Once the delay is acquired, the state machine enters state 508, in which it adapts and monitors the $H$ autocorrelation.

If there is inadequate $H$ suppression, or if the $H$ autocorrelation has changed from the time of acquisition, the state machine returns to the bypass state 504. On the other hand, if $H$ is simply no longer present, the state machine passes from state 508 to state 510 in which it determines whether $H$ returns within a given time (in the illustrative example, 0.5ms) and $A$ is present. If not, the state machine returns to the bypass state 504. If $H$ does return within the given time, the state machine enters a fast-reacquisition state 512. If $H$ is absent or the reacquisition fails, the state machine returns to the bypass state 504. Otherwise, it returns to the adaptation and monitoring state 508.

The change in the MSE depends on the signal's periodic-to-aperiodic (if the latter is predominant, then even a small periodicity change produces a large MSE change) component ratio and/ or the crest-factor of the autocorrelation function. However, we assume that the aperiodic component does not dominate the periodic component (if it did, then we would not need this loss-of-synchronization detector) and that the autocorrelation rolls off over a 1-symbol interval (slightly more than 1 complex-sample duration).

Typically, MSE when loading changes is about $2\times10^{-2}$ (for a 10% change in periodicity or data loading) when compared to an MSE of $5\times10^{-4}$ under constant periodicity/ loading conditions. A significant MSE (say, more than a threshold of $5\times10^{-3}$) triggers loss of synchronization and re-acquisition (to estimate an exact delay or a new ambiguous delay). The threshold is derived based on acceptable false alarm and missed detection probabilities. At the expense of time taken to arrive at a decision, the former probability can further be reduced by requiring that $N$ sequential hypothesis/tests (we chose $N$=8) all indicate that the delay and/or Doppler are/is invalid.

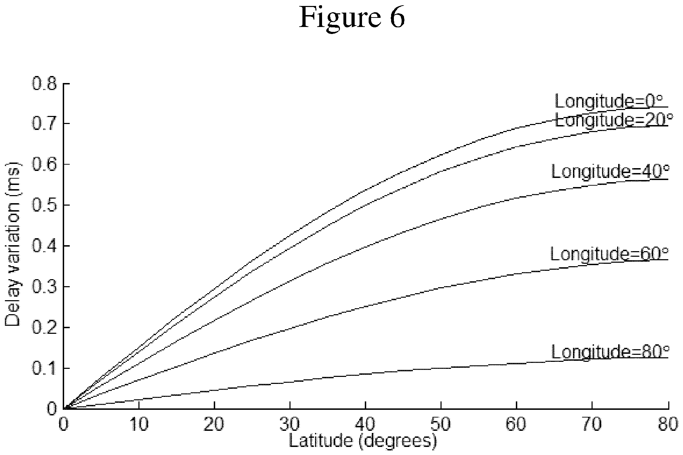

In TDMA systems, the hub transmits to various remote systems in packet slots. Depending on the number of remotes being active at a given instant, hub traffic tends to be periodic for inactive remotes and random for the active remotes, causing partial data loading. If the periodicity due to such partial loading is greater than the range of satellite round trip delay ($\tau_e$) of an earth station, i.e., $\tau_p > \Delta\tau_e$, then we could choose the actual delay itself instead of an ambiguous one. The distance between an earth station and a satellite is $R=[R_e^2+(R_o+R_e)^2-2R_e(R_o+R_e)\cos(\theta-i)\cos\phi]^{\frac{1}{2}}$, where $\theta$=latitude of earth station, $\phi$=satellite longitudinal shift from earth station latitude, $i$=inclination, $R_o$=35,786km, and $R_e$=6,378km. Hence, $\tau_e$= 2·$R$/$c$, where $c$ is 300,000km/s. For example, assuming up to $\pm$0.5° shift in the inclination of a satellite over a day, the minimum and maximum round trip delays seen by an earth station with $\theta$=19.2° and $\phi$=37.0322° are 250.022ms and 250.244ms, i.e., $\tau_e$=250.111ms. For this earth station if $\tau_p$>111$\mu$s, the exact delay is automatically estimated by modifying the delay search range to $\tau_e$-$\tau_p$/2 : $\tau_e$+$\tau_p$/2. Figure 6 shows the delay variation due to earth station location and satellite orbital inclination of 0.5°. From the data one could infer that exact delay can be acquired for TDMA hubs also with at least 2ms of periodicity by generalizing the search range to $\tau_e$-1ms : $\tau_e$+1ms. Further, when accurate delay is acquired under such partial loaded conditions, the state machine for change in periodicity detection described in above section should be disabled, to avoid false re-acquisition due to changes in data loading.

While a preferred embodiment has been set forth in detail above, those skilled in the art who have reviewed the present disclosure will readily appreciate that other embodiments can be realized within the scope of the invention. For example, numerical values are illustrative rather than limiting, as are mentions of specific technologies. Therefore, the present invention should be construed as limited only by the appended claims.

## Claims

1. A method for interference cancellation in a satellite communication system, the method comprising:

   (a) transmitting a hub signal from a first station to a second station via satellite;
   (b) receiving a hub echo signal in the first station;
   (c) in a computing device, performing an autocorrelation on the hub signal to detect a periodicity in the hub signal;
   (d) if the periodicity is detected, determining, in the computing device, a search range for a delay in the hub echo signal in accordance with the periodicity;
   (e) locating the delay in the hub echo signal, using the computing device; and
   (f) in the computing device, performing the interference cancellation in accordance with the delay located in step (e).

2. The method of claim 1, wherein step (d) comprises determining the search range for the delay in accordance with the periodicity detected in step (c) and an estimated satellite round-trip delay of the first station.

3. The method of claim 1, wherein, if the periodicity is not detected, the search range for the delay is set to a default range.

4. The method of claim 1, wherein the delay is located a plurality of times for a plurality of successively higher sampling rates.

5. The method of claim 4, wherein the plurality of successively higher sampling rates comprises a sampling rate that is higher than a signal bandwidth of the hub signal.

6. The method of claim 1, further comprising determining a Doppler value, and wherein step (d) comprises determining a search range for the Doppler value in accordance with the periodicity.

7. The method of claim 6, wherein:

   the delay is located a plurality of times for a plurality of successively higher sampling rates; and
   for a lowest one of the sampling rates, a fine Doppler value and coarse delay are determined.

8. The method of claim 7, wherein the plurality of successively higher sampling rates comprises a sampling rate that is higher than a signal bandwidth of the hub signal.

9. The method of claim 1, further comprising:

   (g) monitoring the autocorrelation performed in step (c);
   (h) from the monitoring performed in step (g), detecting a change in either the periodicity or a periodic-to-aperiodic ratio of the hub signal; and
   (h) when the change exceeds a threshold, re-acquiring the hub signal and performing steps (c)-(f) in accordance with the re-acquired hub signal.

10. A system for interference cancellation in a satellite communication system, the system comprising:

    a communication component for transmitting a hub signal to a remote station via satellite and for receiving a hub echo signal; and
    a computing device, in communication with the communication component, the computing device configured for:

    performing an autocorrelation on the hub signal to detect a periodicity in the hub signal;
    if the periodicity is detected, determining a search range for a delay in the hub echo signal in accordance with the periodicity;
    locating the delay in the hub echo signal; and
    performing the interference cancellation in accordance with the delay.

11. The system of claim 10, wherein the computing device is configured for determining the search range for the delay in accordance with the periodicity and an estimated satellite round-trip delay.

**12.** The system of claim 10, wherein the computing device is configured such that, if the periodicity is not detected, the search range for the delay is set to a default range.

**13.** The system of claim 10, wherein the computing device is configured such that the delay is located a plurality of times for a plurality of successively higher sampling rates.

**14.** The system of claim 13, wherein the computing device is configured such that the plurality of successively higher sampling rates comprises a sampling rate that is higher than a signal bandwidth of the hub signal.

**15.** The system of claim 10, wherein the computing device is further configured for determining a Doppler value and for determining a search range for the Doppler value in accordance with the periodicity.

**16.** The system of claim 15, wherein the computing device is configured such that:

the delay is located a plurality of times for a plurality of successively higher sampling rates; and for a lowest one of the sampling rates, a fine Doppler value and coarse delay are determined.

**17.** The system of claim 16, wherein the computing device is configured such that the plurality of successively higher sampling rates comprises a sampling rate that is higher than a signal bandwidth of the hub signal.

**18.** The system of claim 10, wherein the computing device is further configured for:

monitoring the autocorrelation;
from the monitoring, detecting a change in either the periodicity or a periodic-to-aperiodic ratio of the hub signal; and
when the change exceeds a threshold, re-acquiring the hub signal and performing the operations of performing the autocorrelation through performing the interference cancellation in accordance with the re-acquired hub signal.

**19.** An article of manufacture for interference cancellation in a satellite communication system, the article of manufacture comprising:

a machine-readable tangible persistent storage medium; and
code stored on the medium, the code, when executed on a computing device, controlling the computing device for:

(a) transmitting a hub signal from a first station to a second station via satellite;
(b) receiving a hub echo signal in the first station;
(c) performing an autocorrelation on the hub signal to detect a periodicity in the hub signal;
(d) if the periodicity is detected, determining a search range for a delay in the hub echo signal in accordance with the periodicity;
(e) locating the delay in the hub echo signal; and
(f) performing the interference cancellation in accordance with the delay located in step (e).

## Patentansprüche

**1.** Verfahren zum Interferenzabbruch in einem Satellitenkommunikationssystem, wobei das Verfahren umfasst:

(a) Übertragen eines Hub-Signals von einer ersten Station zu einer zweiten Station mittels Satellit;
(b) Empfangen eines Hub-Echosignals in der ersten Station;
(c) in einer Rechenvorrichtung, Anwenden einer Autokorrelation auf das Hub-Signal, um eine Periodizität in dem Hub-Signal zu erfassen;
(d) falls die Periodizität erfasst wurde, Bestimmen in der Rechenvorrichtung eines Suchbereichs für eine Verzögerung in dem Hub-Echosignal in Übereinstimmung mit der Periodizität;
(e) Lokalisieren der Verzögerung in dem Hub-Echosignal unter Verwendung der Rechenvorrichtung; und
(f) in der Rechenvorrichtung, Durchführen des Interferenzabbruchs in Übereinstimmung mit der Verzögerung, die im Schritt (e) lokalisiert wurde.

**2.** Verfahren nach Anspruch 1, wobei Schritt (d) umfasst:
Bestimmen des Suchbereichs für die Verzögerung in Übereinstimmung mit der Periodizität, die im Schritt (c) erfasst wurde, und einer geschätzten Satellitenumlaufverzögerung der ersten Station.

**3.** Verfahren nach Anspruch 1, wobei der Suchbereich für die Verzögerung auf einen Standardbereich gesetzt wird, falls die Periodizität nicht erfasst wurde.

**4.** Verfahren nach Anspruch 1, wobei die Verzögerung mehrmals bei mehreren sukzessiv höherwerdenden Abtastraten lokalisiert wird.

**5.** Verfahren nach Anspruch 4, wobei die mehreren sukzessiv höherwerdenden Abtastraten eine Abtastrate umfassen, die höher ist als eine Signalbandbreite des Hub-Signals.

**6.** Verfahren nach Anspruch 1 ferner umfassend: Bestimmen eines Dopplerwerts, und wobei Schritt (d) Bestimmen eines Suchbereichs für den Dopplerwert in Übereinstimmung mit der Periodizität umfasst.

**7.** Verfahren nach Anspruch 6, wobei die Verzögerung mehrmals bei mehreren sukzessiv höherwerdenden Abtastraten lokalisiert wird und für eine niedrigste der Abtastraten ein feiner Dopplerwert und eine grobe Verzögerung bestimmt werden.

**8.** Verfahren nach Anspruch 7, wobei die mehreren sukzessiv höherwerdenden Abtastraten eine Abtastrate umfassen, die höher ist als eine Signalbandbreite des Hub-Signals.

**9.** Verfahren nach Anspruch 1 ferner umfassend:

(g) Überwachen der Autokorrelation, die in Schritt (c) angewandt wurde;

(h) aus dem Überwachen, das in Schritt (g) durchgeführt wurde, Erfassen einer Veränderung in entweder der Periodizität oder eines periodischzu-aperiodisch-Verhältnisses des Hub-Signals; und

(h) sobald die Veränderung einen Schwellwert überschreitet, erneutes Aufzeichnen des Hub-Signals und Durchführen der Schritte (c) - (f) in Übereinstimmung mit dem erneut aufgezeichneten Hub-Signal.

**10.** System zum Interferenzabbruch in einem Satellitenkommunikationssystem, wobei das System umfasst:

eine Kommunikationskomponente zum Senden eines Hub-Signals zu einer entfernten Station mittels Satellit und zum Empfangen eines Hub-Echosignals; und

eine Rechenvorrichtung, die in Kommunikation mit der Kommunikationskomponente steht, wobei die Rechenvorrichtung ausgestaltet ist zum:

Anwenden einer Autokorrelation auf das Hub-Signal zum Erfassen einer Periodizität in dem Hub-Signal;

falls die Periodizität erfasst wurde,

Bestimmen eines Suchbereichs für eine Verzögerung in dem Hub-Echosignal in Übereinstimmung mit der Periodizität;

Lokalisieren der Verzögerung in dem Hub-Echosignal; und

Durchführen des Interferenzabbruchs in Übereinstimmung mit der Verzögerung.

**11.** System nach Anspruch 10, wobei die Rechenvorrichtung ausgestaltet ist zum Bestimmen des Suchbereichs für die Verzögerung in Übereinstimmung mit der Periodizität und einer geschätzten Satellitenumlaufverzögerung.

**12.** System nach Anspruch 10, wobei die Rechenvorrichtung so ausgestaltet ist, dass der Suchbereich für die Verzögerung auf einen Standardbereich gesetzt wird, falls die Periodizität nicht erfasst wurde.

**13.** System nach Anspruch 10, wobei die Rechenvorrichtung so ausgestaltet ist, dass die Verzögerung mehrmals bei mehreren sukzessiv höherwerdenden Abtastraten lokalisiert wird.

**14.** System nach Anspruch 13, wobei die Rechenvorrichtung so ausgestaltet ist, dass die mehreren sukzessiv höherwerdenden Abtastraten eine Abtastrate umfassen, die höher ist als eine Signalbandbreite des Hub-Signals.

**15.** System nach Anspruch 10, wobei die Rechenvorrichtung zudem ausgestaltet ist zum Bestimmen eines Dopplerwerts und zum Bestimmen eines Suchbereichs für den Dopplerwert in Übereinstimmung mit der Periodizität.

**16.** System nach Anspruch 15, wobei die Rechenvorrichtung so ausgestaltet ist, dass:

die Verzögerung mehrmals bei mehreren sukzessiv höherwerdenden Abtastraten lokalisiert wird; und

für eine niedrigste der Abtastraten ein feiner Dopplerwert und eine grobe Verzögerung bestimmt werden.

**17.** System nach Anspruch 16, wobei die Rechenvorrichtung so ausgestaltet ist, dass die mehreren sukzessiv höherwerdenden Abtastraten eine Abtastrate umfassen, die höher ist als eine Signalbandbreite des Hub-Signals.

**18.** System nach Anspruch 10, wobei die Rechenvorrichtung ferner ausgestaltet ist zum:

Überwachen der Autokorrelation;

aus dem Überwachen, Erfassen einer Veränderung in entweder der Periodizität oder eines periodischzu-aperiodisch-Verhältnisses des Hub-Signals; und

sobald die Veränderung einen Schwellwert überschreitet, erneutes Aufzeichnen des Hub-Signals und Durchführen der Operationen vom Ausführen der Autokorrelation bis hin zum Durchführen des Interferenzabbruchs in Übereinstimmung mit dem erneut aufgezeichneten Hub-Signal.

19. Erzeugnis zum Interferenzabbruch in einem Satellitenkommunikationssystem, das umfasst:

ein maschinenlesbares, matrielles, persistentes Speichermedium; und
Code, der auf dem Medium gespeichert ist und der, wenn er auf einer Rechenvorrichtung ausgeführt wird, die Rechenvorrichtung ansteuert zum:

(a) Übertragen eines Hub-Signals von einer ersten Station zu einer zweiten Station mittels Satellit;
(b) Empfangen eines Hub-Echosignals in der ersten Station;
(c) Anwenden einer Autokorrelation auf das Hub-Signal zum Erfassen einer Periodizität in dem Hub-Signal;
(d) falls die Periodizität erfasst wurde, Bestimmen eines Suchbereichs für eine Verzögerung in dem Hub-Echosignal in Übereinstimmung mit der Periodizität;
(e) Lokalisieren der Verzögerung in dem Hub-Echosignal; und
(f) Durchführen des Interferenzabbruchs in Übereinstimmung mit der Verzögerung, die im Schritt (e) lokalisiert wurde.

**Revendications**

1. Procédé d'annulation d'interférence dans un système de communication par satellite, le procédé comprenant :

(a) la transmission d'un signal de concentrateur d'une première station à une deuxième station par satellite ;
(b) la réception d'un signal d'écho de concentrateur dans la première station ;
(c) dans un dispositif informatique, l'exécution d'une autocorrélation sur le signal de concentrateur pour détecter une périodicité dans le signal de concentrateur ;
(d) si la périodicité est détectée, la détermination, dans le dispositif informatique, d'une plage de recherche pour un retard dans le signal d'écho de concentrateur conformément à la périodicité ;
(e) la localisation du retard dans le signal d'écho de concentrateur, en utilisant le dispositif informatique ; et
(f) dans le dispositif informatique, l'exécution de l'annulation d'interférence conformément au retard localisé à l'étape (e).

2. Procédé selon la revendication 1, dans lequel l'étape (d) comprend la détermination de la plage de recherche pour le retard conformément à la périodicité détectée à l'étape (c) et à un retard aller-retour de satellite estimé de la première station.

3. Procédé selon la revendication 1, dans lequel, si la périodicité n'est pas détectée, la plage de recherche pour le retard est établie à une plage par défaut.

4. Procédé selon la revendication 1, dans lequel le retard est localisé une pluralité de fois pour une pluralité de fréquences d'échantillonnage successivement plus élevées.

5. Procédé selon la revendication 4, dans lequel la pluralité de fréquences d'échantillonnage successivement plus élevées comprend une fréquence d'échantillonnage qui est plus élevée qu'une bande passante de signal du signal de concentrateur.

6. Procédé selon la revendication 1, comprenant en outre la détermination d'une valeur Doppler, et dans lequel l'étape (d) comprend la détermination d'une plage de recherche pour la valeur Doppler conformément à la périodicité.

7. Procédé selon la revendication 6, dans lequel :

le retard est localisé une pluralité de fois pour une pluralité de fréquences d'échantillonnage successivement plus élevées ; et
pour une fréquence la plus faible des fréquences d'échantillonnage, une valeur Doppler fine et un retard grossier sont déterminés.

8. Procédé selon la revendication 7, dans lequel la pluralité de fréquences d'échantillonnage successivement plus élevées comprend une fréquence d'échantillonnage qui est plus élevée qu'une bande passante de signal du signal de concentrateur.

9. Procédé selon la revendication 1, comprenant en outre :

(g) la surveillance de l'autocorrélation effectuée à l'étape (c) ;
(h) à partir de la surveillance effectuée à l'étape (g), la détection d'un changement soit de la périodicité, soit d'un rapport périodique/apériodique du signal de concentrateur ; et
(h) lorsque le changement dépasse un seuil, la réacquisition du signal de concentrateur et l'exécution des étapes (c) à (f) conformément au signal de concentrateur réacquis.

10. Système d'annulation d'interférence dans un système de communication par satellite, le système comprenant :

un composant de communication pour transmettre un signal de concentrateur à une station à distance par satellite et pour recevoir un signal d'écho de concentrateur ; et
un dispositif informatique, en communication avec le composant de communication, le dispositif informatique étant configuré pour :

exécuter une autocorrélation sur le signal de concentrateur pour détecter une périodicité dans le signal de concentrateur ;
si la périodicité est détectée, déterminer une plage de recherche pour un retard dans le signal d'écho de concentrateur conformément à la périodicité ;
localiser le retard dans le signal d'écho de concentrateur ; et
exécuter l'annulation d'interférence conformément au retard.

11. Système selon la revendication 10, dans lequel le dispositif informatique est configuré pour déterminer la plage de recherche pour le retard conformément à la périodicité et à un retard aller-retour de satellite estimé.

12. Système selon la revendication 10, dans lequel le dispositif informatique est configuré de sorte que, si la périodicité n'est pas détectée, la plage de recherche pour le retard soit établie à une plage par défaut.

13. Système selon la revendication 10, dans lequel le dispositif informatique est configuré de sorte que le retard est localisé une pluralité de fois pour une pluralité de fréquences d'échantillonnage successivement plus élevées.

14. Système selon la revendication 13, dans lequel le dispositif informatique est configuré de sorte que la pluralité de fréquences d'échantillonnage successivement plus élevées comprend une fréquence d'échantillonnage qui est plus élevée qu'une bande passante de signal du signal de concentrateur.

15. Système selon la revendication 10, dans lequel le dispositif informatique est en outre configuré pour déterminer une valeur Doppler et pour déterminer une plage de recherche pour la valeur Doppler conformément à la périodicité.

16. Système selon la revendication 15, dans lequel le dispositif informatique est configuré de sorte que :

le retard est localisé une pluralité de fois pour une pluralité de fréquences d'échantillonnage successivement plus élevées ; et
pour une fréquence la plus faible des fréquences d'échantillonnage, une valeur Doppler fine et un retard grossier sont déterminés.

17. Système selon la revendication 16, dans lequel le dispositif informatique est configuré de sorte que la pluralité de fréquences d'échantillonnage successivement plus élevées comprend une fréquence d'échantillonnage qui est plus élevée qu'une bande passante de signal du signal de concentrateur.

18. Système selon la revendication 10, dans lequel le dispositif informatique est en outre configuré pour :

surveiller l'autocorrélation ;
à partir de la surveillance, détecter un changement soit de la périodicité, soit d'un rapport périodique/apériodique du signal de concentrateur ; et
lorsque le changement dépasse un seuil, réacquérir le signal de concentrateur et effectuer les opérations d'exécution de l'autocorrélation par l'exécution de l'annulation d'interférence conformément au signal de concentrateur réacquis.

19. Article de fabrication pour l'annulation d'interférence dans un système de communication par satellite, l'article de fabrication comprenant :

un support de mémorisation permanent tangible pouvant être lu par une machine ; et
un code mémorisé sur le support, le code, lorsqu'il est exécuté sur un dispositif informatique, commandant le dispositif informatique pour :

(a) transmettre un signal de concentrateur d'une première station à une deuxième station par satellite ;
(b) recevoir un signal d'écho de concentrateur dans la première station ;
(c) effectuer une autocorrélation sur le signal de concentrateur pour détecter une périodicité dans le signal de concentrateur ;
(d) si la périodicité est détectée, déterminer une plage de recherche pour un retard dans le signal d'écho de concentrateur conformément à la périodicité ;
(e) localiser le retard dans le signal d'écho de concentrateur ; et
(f) effectuer l'annulation d'interférence conformément au retard localisé à l'étape (e).

FIG. 1 (PRIOR ART)

# Figure 2a Prior Art

Figure 2b Prior Art

# Figure 3

Baseband *H*

302 → 230ms delay (302) → Append *N/2* zeros to *N/2* samples (304) → *N*-pt. complex FFT (306) → Shift by *L* bins (308) → Complex conjugate (310)

Baseband *A* → *N*-pt. complex FFT (312) → ⊗ (314)

Rank ordered list of ambiguity function peaks. If a Doppler plateau exists then take the mean of the Doppler plateau (324) ← Threshold test (322) ← Derive threshold from ambiguity function's noise floor (320) ← Absolute value (318) ← *N*-pt. complex IFFT (316)

# Figure 4

402

**Compute the autocorrelation of *H*. If *H* is periodic estimate delay and Doppler periodicities**

Periodicty is present

404

**Find coarse Doppler. Limit delay/ Doppler search ranges based on periodicity**

408

**Start Acquisition**

Periodicty is not present

**Set delay/ Doppler search ranges to default**

406

# Figure 5

# Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2002197958 A

### Non-patent literature cited in the description

- **SEYMOUR STEIN.** Algorithms for Ambiguity Function Processing. *IEEE Transactions On Acoustics, Speech and Signal Processing,* June 1981, vol. ASSP-29 (3

- **S. STEIN.** Algorithms for Ambiguity Function Processing. *IEEE Transaction on Acoustics, Speech and Signal Processing,* June 1981, vol. ASSP-29 (3